# EUROPEAN PATENT APPLICATION

(11) **EP 4 578 257 A1**
(43) Date of publication of application: **02.07.2025**
(21) Application number: 24218787.0
(22) Date of filing: 10.12.2024
(51) Int. Cl.: A01B 29/04

(54) **OBJECT REMOVAL SYSTEM FOR A CAGE ROLLER**

(30) Priority: 28.12.2023 US 202318399101
(71) Applicant: Kuhn Krause, Inc., Hutchinson, KS 67501 (US)
(72) Inventor: DAWSON, Eric, SOUTH HUTCHINSON, 67505 (US); RAINS, Reid, INMAN, 67546 (US); READE, Kevin, HUTCHINSON, 67502 (US)
(74) Representative: Hager, Esther Evelyne

(57) **Abstract**

The present invention relates to a rear tool attachment (108) configured for soil clod sizing and firming, comprising at least one rolling cage (208) that rotates when being towed and is in contact with a soil surface, the at least one rolling cage (208) includes a pair of circular-shaped end plates (302) located at each end of a respective rolling cage (208) and, a plurality of structural members (310) arranged spaced apart around a circumference of the end plates (302), forming a cage-like structure, wherein at least one of the structural members (310) having a removable section (212) between the end plates (302). The invention also relates to a tillage tool equipped with such a rear tool attachment.

## Description

The present invention relates to the field of rolling cages for soil preparation. More specifically, the present invention relates to an object removal from inside a rolling cage.

Disking is a soil preparation practice that includes deep or shallow soil tillage. By using the best soil tillage practices, farmers can ensure well-prepared soil structure. Disking breaks up clods and surface crusts, thereby improving soil granulation, surface uniformity and reducing soil erosion. It is typically performed at a soil depth of about 10 - 15 cm.

Disc tillage tools can deliver high-speed conservation tillage to control stubborn, chemical resistant weed growth, while sizing and evenly distributing tough residue throughout the worked soil profile. This action kills weeds, limits potential movement of wind driven residue, builds soil organic matter by contributing to residue breakdown, and helps prevent formation of a residue mat on or below the soil surface which could inhibit seed soil contact and movement of moisture and nutrients throughout the profile. Various finishing attachments are available to provide a consistent, uniform field finish. One such attachment is a soil conditioning reel that delivers clod sizing and firming during high-speed operation.

A soil conditioning reel may take the form of a single rolling cage or series connected rolling cages. Rolling cages are notorious for picking up objects (mainly rocks) without a good way to remove them. Rolling cages are typically fully welded for durability in field operation.

In view of the above, there is a need for a rolling cage that allows for easy removal of rocks and other objects that can be picked and trapped inside of the rolling cage.

An aspect is a towable rear tool attachment configured for soil clod sizing and firming, that can include at least one rolling cage that rotates when being towed and is in contact with a soil surface. The at least one rolling cage includes a pair of circular-shaped end plates located at each end of a respective rolling cage, and a plurality of structural members arranged spaced apart around a circumference of the end plates, forming a cage-like structure. At least one of the structural members has a removable section between the end plates.

These and other advantages of the invention will become more apparent and more readily appreciated from the following detailed description of the exemplary embodiments of the invention taken in conjunction with the accompanying drawings where:
FIG. 1 is a schematic of a tillage tool, in accordance with an exemplary aspect of the disclosure;
FIG. 2 is a schematic of a tillage tool having a rolling cage attachment, in accordance with an exemplary aspect of the disclosure; and
FIGs. 3A, 3B are detailed views of the rolling cage attachment, in accordance with an exemplary aspect of the disclosure.

Various methods, devices, and apparatuses are described below to provide an example of at least one embodiment of the claimed subject matter. No embodiment described below limits any claimed subject matter and any claimed subject matter may cover apparatuses and methods that differ from those described below. The claimed subject matter is not limited to methods, devices, and apparatuses having all of the features of any one methods, devices, or apparatuses described below or to features common to multiple or all of the methods, devices, and apparatuses described below. Subject matter that may be claimed may reside in any combination or sub-combination of the elements or process steps disclosed in any part of this document including its claims and figures. Accordingly, it will be appreciated by a person skilled in the art that methods, devices, and apparatuses disclosed in accordance with the teachings herein may embody any one or more of the features contained herein and that the features may be used in any particular combination or sub-combination that is physically feasible and realizable for its intended purpose.

Furthermore, it is possible that methods, devices, and apparatuses described below is not an embodiment of any claimed subject matter. Any subject matter that is disclosed in and methods, devices, and apparatuses described herein that is not claimed in this document may be the subject matter of another protective instrument, for example, a continuing patent application, and the applicant(s), inventor(s) and/or owner(s) do not intend to abandon, disclaim, or dedicate to the public any such invention by its disclosure in this document.

It will also be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures, and components have not been described in detail so as not to obscure the example embodiments described herein. Also, the description is not to be considered as limiting the scope of the example embodiments described herein.

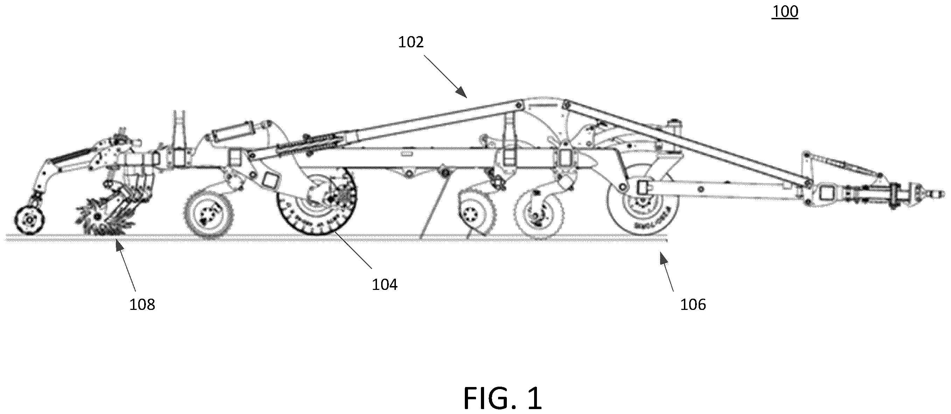

FIG. 1 illustrates therein is a perspective view of a tillage tool 100. The tillage tool 100 can include a front support wheel system 106, a constant leveling linkage system 102, and an attached rear tool 108. In addition, the tillage tool 100 can include one or more depth gauging wheels 104. In embodiments disclosed herein, the rear tool attachment 108 includes a rolling cage that delivers clod sizing and firming during high-speed operation. The rolling cage can be used to crumble, reconsolidate and level various soils. As the diameter of the rolling cage increases, the load carrying capacity and reconsolidation improves. This means that rollers with the appropriate diameters can also be used in cultivation of light as well as medium soils. The tillage tool 100 may be a disc tillage tool.

As noted above, rolling cages have cage-like structures as attachments for tilling tools and are notorious for picking up objects (mainly rocks) that become entrapped without a way to remove them. Rocks can become loosened and brought to a soil surface during tillage. These rocks may be of a size and shape that can be worked into the inside of the cage and begin to bounce around the inside of the cage. The entrapped rocks can be an annoyance, but more importantly, can do damage to the cage, especially in high-speed operation. Conventional rolling cages are fully welded structures. Rocks and other objects that become entrapped in the cage may remain inside the cage through the life of the rolling cage.

A solution is a removable section of the cage that can be removed using only basic hand tools. The removable section can be removed in order to gain access to the inside of the cage and remove any rocks or other objects that have become entrapped inside the cage. This solution is configured to maintain the durability of the cage while providing the additional functional components used for easily removing rocks and other objects.

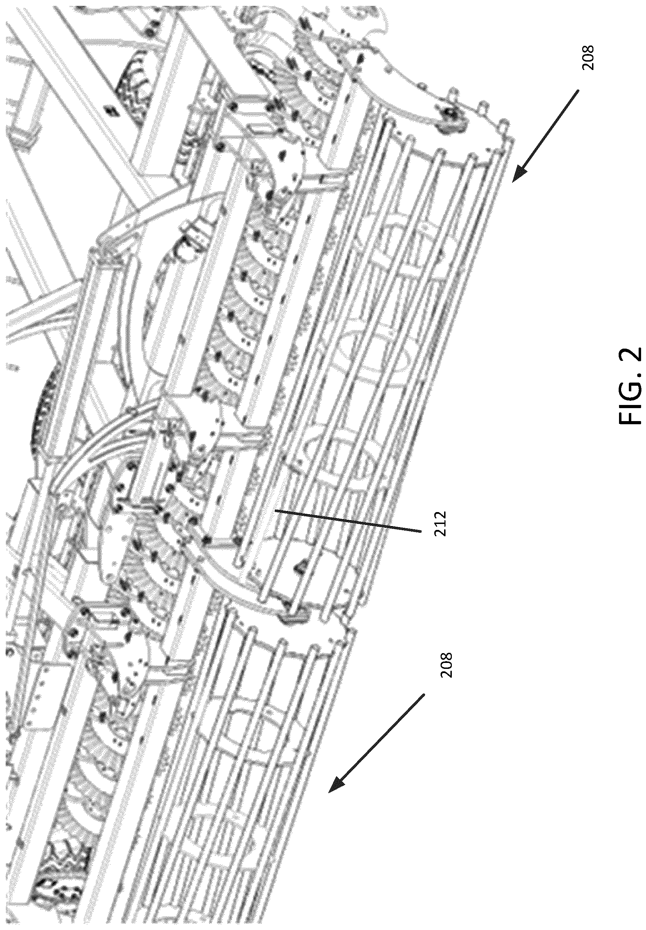

FIG. 2 is a schematic view of a part of a tillage tool having two attached rolling cages. A rolling cage is typically configured as a single rolling cage. In some embodiments, a rolling cage can include two or more series connected rolling cages 208. Each cage 208 can include at least one removable section 212. In some embodiments, the removable sections are positioned to allow access in a manner that the entire space of the interior of the cage is within reach by an adult person.

As shown in the figures, the rolling cage 208 includes a pair of end plates 302 located at each end of the respective cage 208 and a plurality of structural members 310 arranged spaced apart around a circumference of the end plates 302. This arrangement forms a cage-like structure. A plurality of structural members 310 is formed by at least two structural members 310. The rolling cage 208 shown in Figure 2 includes two end plates 302, more than ten structural members 310, for example thirteen structural members 310 and one removable section 212. The removable section 212 is arranged at one end of the rolling cage 208. The removable section 212 is fixed to one of the end plates 302. The shape of the end plates 302 may be circular.

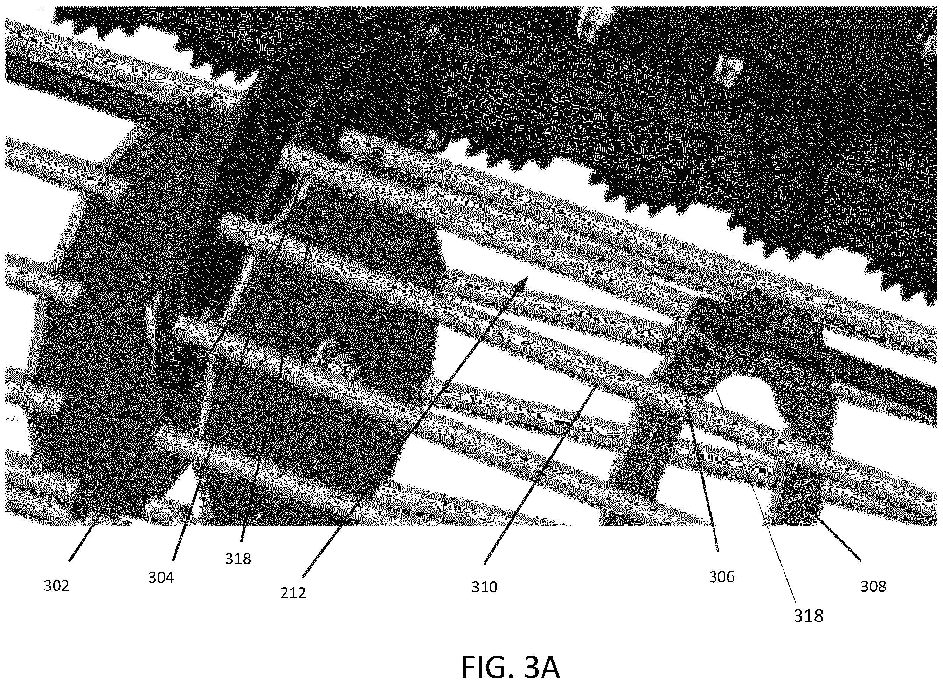

As shown in FIG. 3A, the cage structure of each of the rolling cages 208 includes an end plate 302 at each end of a respective rolling cage. The end plates 302 are circular in shape. One or more support plates 308 may be positioned in parallel with and between the end plates 302. A plurality of structural members 310 are arranged spaced around the circumference of the end plates 302, forming a cage-like structure. In one embodiment, the plurality of structural members 310 can be arranged around a support plate 308. The cage structure has a removable section 212. The removable section 212 may be in the form of one or more removable bars. In the case that there are no support plates 308, the removable section 212 with removable bars extends the entire length of a rolling cage 208. In the case that there are one or more support plates 308, the removable section 212 with removable bars may be positioned at an end of the rolling cage 208 or positioned in the center of the rolling cage 208, for example, mounted to a pair of support plates 308. The rolling cage 208 shown in FIG. 2 includes three support plates 308. The support plates 308 are placed between the end plates 302. The shape of the support plates 308 may be ring-shaped or circular-shaped. According to a not shown example, the removable section 212 may be fixed between two support plates 308.

The invention relates to a rear tool attachment 108 for a towable tillage tool 100 configured for soil clod sizing and firming. The rear tool attachment 108 includes a rolling cage 208 that rotates when being towed and is in contact with a soil surface. The rolling cage 208 includes a pair of end plates 302 located at each end of the rolling cage 208, a support plate 308, in parallel with and between the end plates 302 and structural members 310 arranged equally spaced apart around a circumference of the end plates 208 and the support plates 308, forming a cage-like structure. At least one of the structural members 310 having a removable section 212 between one end plate 302 and the support plate 308 configured for easy removal of rocks and other objects that can be picked and trapped inside of the rolling cage 208.

Each of the structural members 310 can have a circular cross-section or a rectangular cross-section. The structural members 310 may be bars that are solid or hollow. Hollow bars can be used to reduce weight of a rolling cage 208. As in conventional rolling cages, bars 310 may be welded to the end plates 302, as well as a support plate 308. Bars 310 are made of metal, preferably steel. Removable bars for the removable section 212 are removably mounted.

The structural members 310 can be straight or arranged at a small angle from one end plate 302 to the other end plate 302, forming a twisted pattern for an outer cylindrical surface of the cage. Such a twisted pattern may be viewed as though one end plate 302 is held stationary while the other end plate 302 is slightly rotated, for example about five degrees. The amount of twist can be in a range of two degrees to ten degrees. The twisted pattern is used to force soil transverse to the direction of travel during clod sizing and firming.

The structural members 310 are held in place by curved notches (referred to as saddle-like supports) around the circumference of the end plates 302 and around the circumference of the at least one support plate 308. The bar cross-section can be, but is not limited to, round or rectangular. Alternative cross-sections are flat, square, tubing, or another profile that can be manufactured and has value. When the bar 310 has a circular cross-section, the curved notches may be deep enough and have a curvature that matches the circumference of a bar, to hold a bar 310 in place, but shallow such that a bar extends to a height of about a radius of the bar beyond the circumference of the end plate 302 or support plate 308. Rectangular bars other than the removable bar are welded to plates. When the bar 310 has a rectangular cross-section, the notches are straight to match the rectangular shape, and are shallow such that a bar 310 extends to a height of about half the height of the bar beyond the circumference of the end plate 302 or support plate 308.

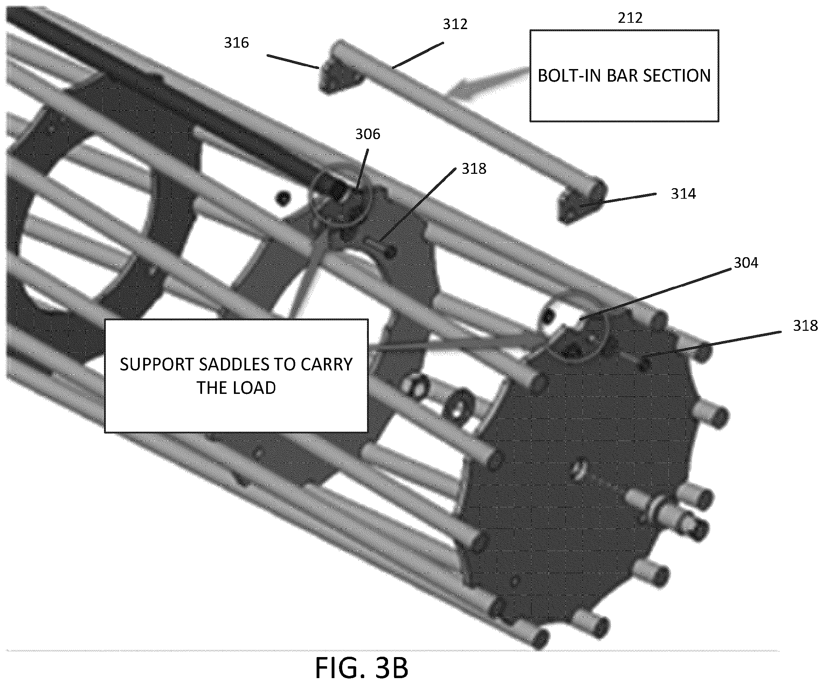

FIG. 3B illustrates a break-out view of a removable section. In one embodiment, the removable section 212 is a bolt-in bar member that includes a pair of mounting plates 314, 316 welded to each end of a bar 312 (see FIG. 3B). Each mounting plate is mounted by fasteners 318 to respective end plate 302 or support plate 308.

The types of fasteners 318 can include, but are not limited to, threaded bolts and corresponding nuts, threaded bolts that can be screwed into a threaded hole, or a cotter pin, to name a few. The fasteners 318 can include one or more washer. A cotter pin type fastener may be a self-locking cotter pin. The fasteners 318 should preferably provide a positive clamp load.

As shown in FIG. 3A, the cage of the rolling cage 208 includes at least one bolt-in bar 212 that maintains the structural integrity by saddle-shaped supports 304, 306 to keep the ground impact load off of the fasteners 318. In FIG. 3B, the bulkhead "saddle" supports 304, 306, are shown. The supports 304, 306 are deep enough and have a curvature that matches the circumference of the bar 312, to hold the bar 312 in place, but shallow such that the bar extends to a height of about a radius of the bar beyond the circumference of the end plate 302 or support ring plate 308.

The bolt-in removable bar 212 is shown with welded support plates 314, 316 offset from the ends of the bar 312. The amount of offset is at least an amount that is sufficient to extend past the entire width of the end plates 302, or support plate 308, whichever corresponds to the ends of the bar 312. Each welded support plate 314, 316 has at least two holes where fasteners 318, such as bolts, are inserted. The welded support plate 314, 316 is mounted by being bolted to an end plate 302 or support ring plate 312 to face inward toward the center rotation axis of the rolling cage and to be within the periphery of the circumference of the end plate 302 or support plate 308 that the welded support plate is mounted to.

According to a particular embodiment, providing the removable section 212 in the middle or close to the middle of the rolling cage 208, taking into account the width of the cage, would enable an object to be removed from either side by passing through the ring-shaped support plate 308.

## Claims

1. Rear tool attachment (108) configured for soil clod sizing and firming, comprising:
at least one rolling cage (208) that rotates when being towed and is in contact with a soil surface, the at least one rolling cage (208) includes a pair of end plates (302) located at each end of a respective rolling cage (208) and a plurality of structural members (310) arranged spaced apart around a circumference of the end plates (302), forming a cage-like structure, ***characterised in that*** at least one of the structural members (310) having a removable section (212) between the end plates (302).

2. Rear tool attachment according to of claim 1, ***characterised in that*** each of the structural members (310) have a circular cross-section or a rectangular cross-section.

3. Rear tool attachment of according to claim 1 or 2, ***characterised in that*** the removable section (212) is a portion of a structural member (310) that is removably bolted to the one said end plate (302) and the at least one support plate (308).

4. Rear tool attachment according to any one of claims 1 to 3, ***characterised in that*** the structural members (310) are arranged in a twisted pattern such that an end of each structural member (310) is attached to one end plate (302) is in a position rotated a predetermined angle from the other end that is attached to another end plate (302).

5. Rear tool attachment according to claim 4, ***characterised in that*** the predetermined angle is substantially five degrees of rotation.

6. Rear tool attachment according to any one of claims 1 to 5, ***characterised in that*** the removable section (212) is a bolt-in bar having a pair of mounting plates (314, 316) welded to each end of a bar (312).

7. Rear tool attachment according to any one of claims 1 to 5, ***characterised in that*** the removable section (212) includes a bar, wherein the end plates (302) have a plurality of indented portions spaced around the circumference of a respective said end plate (302) into which the structural members (310) are positioned, wherein the bar is positioned in one said indented portion.

8. Rear tool attachment according to claim 6, ***characterised in that*** the pair of mounting plates (314, 316) are mounted to face inward toward a center rotation axis of the rolling cage (208) and within the periphery of the circumference of one said end plate (302).

9. Rear tool attachment according to claim 6, ***characterised in that*** each of the mounting plates (314, 316) are mounted to one said end plate (302) by at least two threaded bolts and corresponding nuts or mounted to one said end plate (302) by a self-locking cotter pin or mounted to one said end plate (302) having a threaded opening by a threaded bolt.

10. Rear tool attachment according to any one of claim 1, ***characterised in that*** the structural members (310) are arranged around a circumference of at least one support plate (308), wherein the at least one support plate (308) is arranged in parallel with and between the end plates (302).

11. Rear tool attachment according to any one of claim 5 to 10, ***characterised in that*** at least one structural member (310) having a removable section (212) between one said end plate (302) and one support plate (308).

12. Rear tool attachment according to any one of claim 1 to 11, ***characterised in that*** the structural members (310) are bars, the end plates (302) are circular-shaped end plates, and the support plates (308) are ring-shaped support plates.

13. Tillage tool (100) comprising a front support wheel system (106) a constant leveling linkage system (102) and a rear tool attachment (108) ***characterised in that*** the rear tool attachment (108) consists of a rear tool attachment according to any of claims 1 to 12.
